(19) Europäisches Patentamt

European Patent Office

Office européen des brevets

(11) **EP 3 461 035 A1**

(12) **EUROPEAN PATENT APPLICATION**

(43) Date of publication:
**27.03.2019 Bulletin 2019/13**

(51) Int Cl.:
***H04B 10/61*** *(2013.01)*

(21) Application number: **18192922.5**

(22) Date of filing: **06.09.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.09.2017 US 201715696939**

(71) Applicant: **Nokia Solutions and Networks Oy
02610 Espoo (FI)**

(72) Inventors:
• **Lee, Sian Chong
Murray Hill, NJ New Jersey 07974 (US)**

• **Houtsma, Vincent
New Providence, NJ New Jersey 07974 (US)**
• **van Veen, Doutje
New Providence, NJ New Jersey 07974 (US)**
• **Zhu, Chen
Edison, NJ New Jersey 08817 (US)**
• **Kaneda, Noriaki
Westfield, NJ New Jersey 07090 (US)**
• **Eggleston, Michael
Murray Hill, NJ New Jersey 07974 (US)**

(74) Representative: **Bryers LLP
7 Gay Street
Bath, Bath and North East Somerset BA1 2PH
(GB)**

(54) **COHERENT OPTICAL RECEIVER FOR MEDIUM- AND SHORT-REACH LINKS**

(57) A coherent optical receiver having an analog electrical circuit connected to combine the outputs of multiple photodetectors to generate an electrical output signal from which the data encoded in a received modulated optical signal can be recovered in a robust and straightforward manner. In an example embodiment, the analog electrical circuit includes one or more transimpedance amplifiers connected between the photodetectors and the receiver's output port. The coherent optical receiver may include a dual-polarization optical hybrid coupled to eight photodiodes to enable polarization-insensitive detection of the received modulated optical signal. The signal processing implemented in the analog electrical circuit advantageously enables the use of relatively inexpensive local-oscillator sources that may have relaxed specifications with respect to linewidth and wavelength stability. Different embodiments of the analog electrical circuit can be used to enable the receiver to receive amplitude- and intensity-encoded modulated optical signals.

*FIG. 1*

100

EP 3 461 035 A1

**Description**

BACKGROUND

Field

The present disclosure relates to optical communication equipment and, more specifically but not exclusively, to a coherent optical receiver that can be used in medium- and/or short-reach links.

Description of the Related Art

Optical receivers are often used in short- and medium-reach communication systems. Such receivers are represented by a very diverse group of devices, e.g., ranging from those directed to low-cost and/or high-volume applications to those providing extreme performance characteristics for niche and/or low-volume products. Different technical solutions and/or enabling technologies can be used to meet the specific requirements of each particular application. Such requirements may include one or more of: component density, power consumption, device cost, reach distance, performance benchmarks, etc. Several application-specific factors typically need to be considered before a suitable optical receiver can be designed and constructed for the intended application.

SUMMARY

Disclosed herein are various embodiments of a coherent optical receiver having an analog electrical circuit connected to combine the outputs of multiple photodetectors to generate an electrical output signal from which the data encoded in the received modulated optical signal can be recovered in a robust and straightforward manner. In an example embodiment, the analog electrical circuit includes one or more transimpedance amplifiers connected between the photodetectors and the receiver's output port. The coherent optical receiver may include a dual-polarization optical hybrid coupled to eight photodiodes to enable polarization-insensitive detection of the received modulated optical signal. The analog signal processing implemented in the analog electrical circuit advantageously enables the use of relatively inexpensive local-oscillator sources that may have relaxed specifications with respect to linewidth and wavelength stability while still being able to provide the significant benefits of coherent detection. Different embodiments of the analog electrical circuit can be used to enable the receiver to receive amplitude- and/or intensity-encoded modulated optical signals.

According to an example embodiment, provided is an apparatus comprising an optical hybrid configured to generate a plurality of different optical interference signals by optically mixing an optical input signal and an optical local-oscillator signal, a plurality of photodetectors, each configured to generate a respective electrical signal in response to receiving a respective subset of the different optical interference signals from the optical hybrid, and an analog electrical circuit connected to the plurality of photodetectors to generate an electrical output signal at an output port thereof in response to at least four of the respective electrical signals, and wherein the analog electrical circuit comprises a first transimpedance amplifier connected between the plurality of photodetectors and the output port. The apparatus can further comprise a data-recovery circuit configured to recover data encoded in the optical input signal by processing the electrical output signal generated by the analog electrical circuit. The data-recovery circuit can comprise a clock-recovery circuit configured to generate a clock signal corresponding to the optical input signal in response to receiving the electrical output signal, and a slicer circuit configured to compare samples of the electrical output signal with a set of thresholds to recover the data, the samples being acquired at times selected using the clock signal. The data-recovery circuit can comprise an analog-to-digital converter configured to generate a stream of digital samples representing the electrical output signal, and a digital signal processor configured to recover the data using the stream of digital samples. The analog electrical circuit can further comprise three additional transimpedance amplifiers connected between the plurality of photodetectors and the output port, and four tunable phase shifters, each connected to an output of a respective one of the first and three additional transimpedance amplifiers. In an example, the first transimpedance amplifier can comprise a positive input connected to a first photodetector of the plurality of photodetectors to receive the respective electrical signal generated by the first photodetector, and a negative input connected to a second photodetector of the plurality of photodetectors to receive the respective electrical signal generated by the second photodetector. The analog electrical circuit can generate the electrical output signal at the output port thereof in response to eight of the respective electrical signals. The plurality of photodetectors can comprise eight photodiodes. The first transimpedance amplifier can generate the electrical output signal at an output thereof, said output being connected to the output port of the analog electrical circuit. The optical hybrid can generate first, second, third, and fourth optical interference signals of the plurality of different optical interference signals using different respective combinations of light of a first polarization of the optical input signal and the optical local-oscillator signal. The optical hybrid can to generate fifth, sixth, seventh, and eighth optical interference signals of the plurality of different optical interference signals using different respective combinations of light of a second polarization of the optical input signal and the optical local-oscillator signal, the second polarization being orthogonal to the first polarization. Each of the different respective combinations of the light can be mixtures of the light of the first polarization of the optical input signal and the optical local-oscillator signal with relative phases of $0 \pm 5$ degrees, $90 \pm 5$ degrees, $180 \pm 5$ degrees, and $270 \pm 5$ degrees, respectively. A laser configured to generate the optical local-oscillator signal can be provided. The laser can controllably change a carrier wavelength of the optical local-oscillator signal. The analog electrical circuit can generate the electrical output signal in a manner that causes the electrical output signal to be proportional to an optical power of the optical input signal. The analog electrical circuit can comprise a squaring circuit configured to generate a first electrical signal whose amplitude is proportional to a square of an amplitude of an electrical signal generated using a first photodetector of the plurality of photodetectors, a second electrical signal whose amplitude is proportional to a square of an amplitude of an electrical signal generated using a second photodetector of the plurality of photodetectors, a third electrical signal whose amplitude is proportional to a square of an amplitude of an electrical signal generated using a third photodetector of the plurality of photodetectors, and a fourth electrical signal whose amplitude is proportional to a square of an amplitude of an electrical signal generated using a fourth photodetector of the plurality of photodetectors, and an adding circuit configured to generate the electrical output signal using a sum of the first, second, third, and fourth electrical signals. The analog electrical circuit can comprise a squaring circuit configured to generate a first electrical signal whose amplitude is proportional to a square of an amplitude of an electrical signal generated using a first photodetector of the plurality of photodetectors, a second electrical signal whose amplitude is proportional to a square of an amplitude of an electrical signal generated using a second photodetector of the plurality of photodetectors, a third electrical signal whose amplitude is proportional to a square of an amplitude of an electrical signal generated using a third photodetector of the plurality of photodetectors, and a fourth electrical signal whose amplitude is proportional to a square of an amplitude of an electrical signal generated using a fourth photodetector of the plurality of photodetectors, a first adding circuit configured to generate a first summed signal using a sum of the first electrical signal and the second electrical signal, and a second summed signal using a sum of the third electrical signal and the fourth electrical signal, a square-root-generating circuit configured to generate a first square-root signal proportional to a square root of the first summed signal, and a second square-root signal proportional to a square root of the second summed signal, and a second adding circuit configured to generate the electrical output signal using a sum of the first square-root signal and the second square-root signal. The analog electrical circuit can comprise a first adding circuit configured to generate a first summed signal using a sum of an electrical signal generated using a first photodetector of the plurality of photodetectors and an electrical signal generated using a second photodetector of the plurality of photodetectors, and a second summed signal using a sum of an electrical signal generated using a third photodetector of the plurality of photodetectors and an electrical signal generated using a fourth photodetector of the plurality of photodetectors, a squaring circuit configured to generate a first electrical signal whose amplitude is proportional to a square of an amplitude of the first summed signal, and a second electrical signal whose amplitude is proportional to a square of an amplitude of the second summed signal, and a second adding circuit configured to generate the electrical output signal using a sum of the first electrical signal and the second electrical signal.

According to another example embodiment, provided is a manufacturing method that can comprise configuring an optical hybrid to generate a plurality of different optical interference signals by optically mixing an optical input signal and an optical local-oscillator signal; connecting a plurality of photodetectors to cause each of the photodetectors to generate a respective electrical signal in response to receiving a respective subset of the different optical interference signals from the optical hybrid; and connecting an analog electrical circuit to the plurality of photodetectors to cause the analog electrical circuit to generate an electrical output signal at an output port thereof in response to at least four of the respective electrical signals, said connecting including connecting a transimpedance amplifier between the plurality of photodetectors and the output port.

According to yet another example embodiment, a communication method can comprise applying an optical input signal to an optical hybrid to generate a plurality of different optical interference signals by optically mixing therein said optical input signal and an optical local-oscillator signal; operating a plurality of photodetectors to cause each of the photodetectors to generate a respective electrical signal in response to receiving a respective subset of the different optical interference signals from the optical hybrid; and generating an electrical output signal using an analog electrical circuit connected to the plurality of photodetectors, the electrical output signal being generated at an output port of the analog electrical circuit in response to at least four of the respective electrical signals, said generating including using a transimpedance amplifier connected between the plurality of photodetectors and the output port.

BRIEF DESCRIPTION OF THE DRAWINGS

Other aspects, features, and benefits of various disclosed embodiments will become more fully apparent, by way of example only, from the following detailed description and the accompanying drawings, in which:

FIG. 1 shows a block diagram of a coherent optical receiver according to an embodiment;

FIG. 2 shows a block diagram of an analog electrical circuit that can be used in the coherent optical receiver of FIG. 1 according to an embodiment;

FIG. 3 shows a block diagram of an analog electrical circuit that can be used in the coherent optical receiver of FIG. 1 according to another embodiment;

FIG. 4 shows a block diagram of an analog electrical circuit that can be used in the coherent optical receiver of FIG. 1 according to yet another embodiment;

FIG. 5 shows a block diagram of an analog electrical circuit that can be used in the coherent optical receiver of FIG. 1 according to yet another embodiment;

FIG. 6 shows a block diagram of an optical-to-electrical converting circuit that can be used in the coherent optical receiver of FIG. 1 according to an alternative embodiment;

FIG. 7 shows a block diagram of a data-recovery circuit that can be used in conjunction with the coherent optical receiver of FIG. 1 according to an embodiment;

FIG. 8 shows a block diagram of a data-recovery circuit that can be used in conjunction with the coherent optical receiver of FIG. 1 according to another embodiment; and

FIG. 9 shows a block diagram of a communication system that can use one or more instances of the coherent optical receiver of FIG. 1 according to an embodiment.

DETAILED DESCRIPTION

Optical links for access and datacenter-interconnect applications are typically limited by optical loss, which can be addressed as a receiver-sensitivity problem. Optical amplifiers may not be suitable for these applications due to relatively high cost and/or complexity of the resulting systems. As an alternative to optical amplifiers, coherent detection using a local oscillator (laser) can be used to provide coherent gain. The coherent gain can increase the receiver sensitivity, thereby enabling the use of longer optical links and/or supporting more users, e.g., in a passive-optical-network (PON) configuration.

Various embodiments disclosed herein are directed at providing a robust method and apparatus suitable for coherently detecting a modulated optical signal, e.g., received through a loss-limited medium/short-reach optical link. Some embodiments can be used to implement an optical receiver that can operate without the use of digital signal processing. Some embodiments can be used to reduce the cost of the optical receiver, e.g., by using, as a local oscillator, a laser whose output has a relatively large linewidth.

Some of the disclosed embodiments can provide one or more of the following benefits and/or advantages:

(i) operate in a polarization-insensitive manner;

(ii) not require polarization tracking;

(iii) provide enhanced sensitivity, e.g., due to the use of balanced detection schemes;

(iv) utilize a non-linear electrical (e.g., trans-impedance or functionally similar) amplifier;

(v) be suitable for burst-mode operation; and

(vi) repurpose some of the readily available off-the-shelf parts, such as those already commercially produced in relatively large quantities.

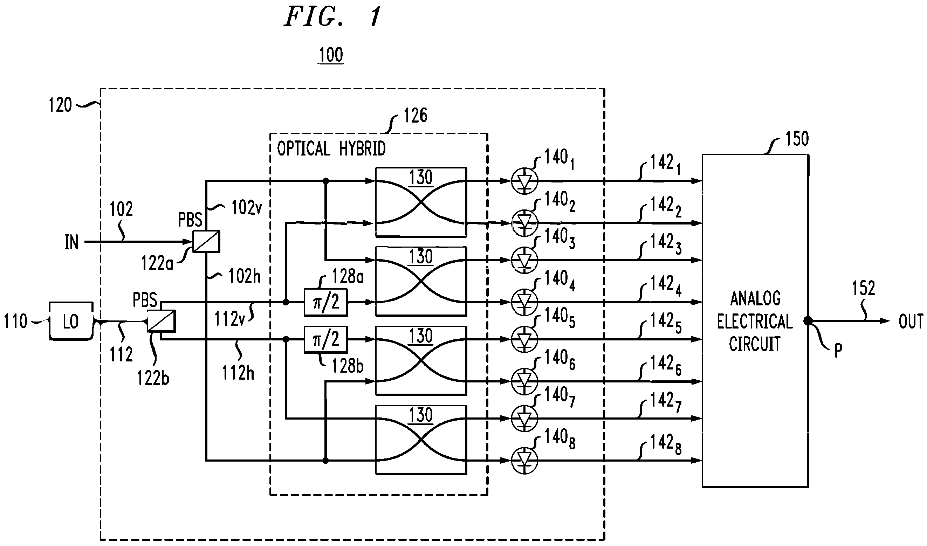

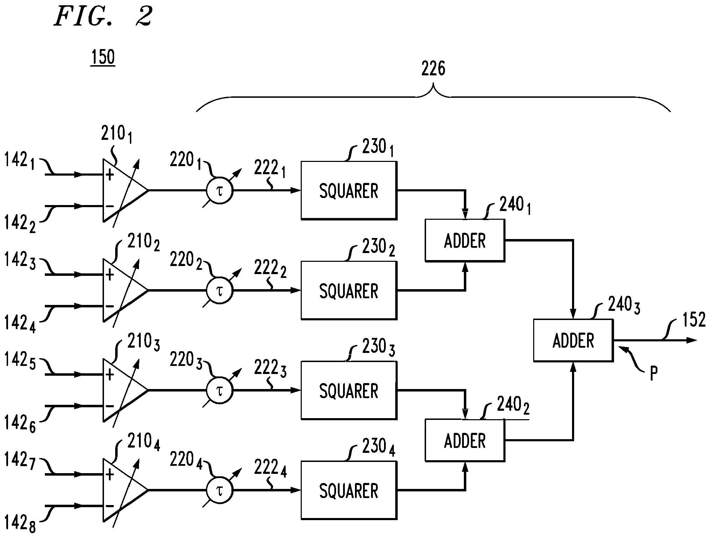

FIG. 1 shows a block diagram of a coherent optical receiver **100** according to an embodiment. Receiver **100** is configured to receive a modulated optical input signal **102,** e.g., from a remote transmitter, via an external optical communication link (e.g., an optical fiber, not explicitly shown in FIG. 1). Optical input signal **102** is applied to an optical-to-electrical (O/E) converter **120** that converts this signal into eight electrical signals $142_1$-$142_8$. An analog electrical circuit **150** then combines electrical signals $142_1$-$142_8$ to generate at an output port **P** an electrical output signal **152,** from which the data encoded in modulated optical input signal 102 can be recovered in a conventional manner. Example analog electrical circuits that can be used to implement circuit **150** are described in more detail below in reference to FIGs. 2-6.

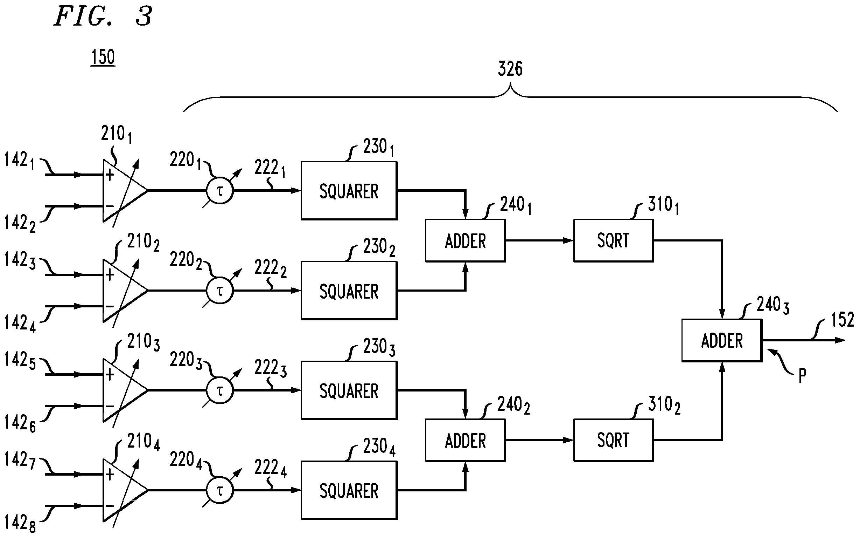

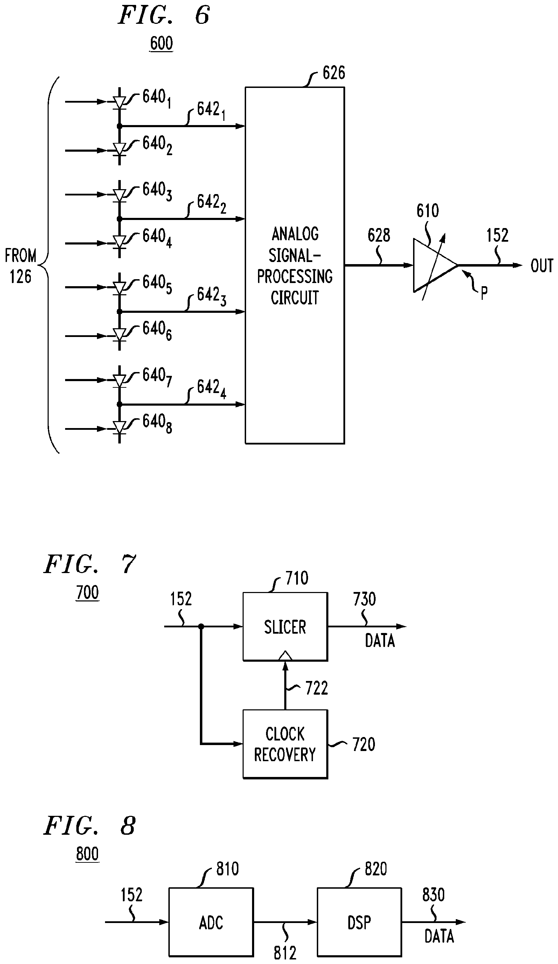

In an example embodiment, optical input signal **102** is not polarization-division multiplexed. As a result, in each time slot, optical input signal **102** applies a single optical symbol to receiver **100.** Depending on the type of modulation used at the remote transmitter, the optical symbol may encode one bit (e.g., using on/off keying, OOK) or multiple bits (e.g., using pulse amplitude modulation, PAM). In the latter case, the bit-word value carried by the optical symbol may be encoded in the amplitude thereof or in the intensity (e.g., squared amplitude) thereof. Embodiments of analog electrical circuit **150** that can be used for processing the amplitude-encoded optical signals are described in reference to FIGs. 3, 5, and 6. Embodiments of analog electrical circuit **150** that can be used for processing the intensity-encoded optical signals are described in reference to FIGs. 2, 4, and 6. Each of the embodiments of analog electrical circuit **150** shown in FIGs. 2-6 can be used for processing OOK signals. When coupled with a digital signal processor (DSP), e.g., as indicated in FIG. 8, each of the embodiments of analog electrical circuit **150** shown in FIGs. 2-6 can be used for processing both amplitude- and intensity-encoded optical signals.

O/E converter **120** is configured to generate electrical signals $142_1$-$142_8$ using an optical local-oscillator (LO) signal **112** supplied by a laser **110**. In some embodiments, laser **110** can be tunable and, as such, capable of changing the carrier wavelength of LO signal **112**, e.g., to enable detection of any selected channel of a wavelength-division-multiplexed (WDM) channel set.

In an example embodiment, O/E converter **120** comprises polarization beam splitters (PBSs) **122a** and **122b** configured to decompose optical signals **102** and **112**, respectively, into two respective orthogonally polarized components, illustratively vertically polarized components **102v** and **112v** and horizontally polarized components **102h** and **112h**. Polarization components **102v, 112v, 102h,** and **112h** are applied to an optical hybrid **126**. The internal structure of optical hybrid **126** shown in FIG. 1 is an example structure shown for illustration purposes. An optical hybrid **126** having an alternative internal structure can similarly be used, e.g., as would be readily understood by a person of ordinary skill in the pertinent art.

As shown, optical hybrid **126** is configured to split each of polarization components **102v, 112v, 102h,** and **112h** into two respective (attenuated) copies, e.g., using a conventional 3-dB power splitter (not explicitly shown in FIG. 1). A relative phase shift of about 90 degrees ($\pi$/2 radian) is then applied to one copy of component **112v** and one copy of component **112h** using phase shifters **128a** and **128b,** respectively. The various copies of signals **102v, 112v, 102h,** and **112h** are then optically mixed with each other as indicated in FIG. 1 using four optical signal mixers **130.** The resulting eight mixed (e.g., optical interference) signals produced by mixers **130** are detected by eight photo-detectors (e.g., photodiodes) $140_1$-$140_8$. The eight electrical signals generated by photodiodes $140_1$-$140_8$ are electrical signals $142_1$-$142_8$.

As used herein, the term "optical hybrid" refers to an optical mixer designed to mix a first optical input signal having a carrier frequency and a second optical input signal having approximately the same (e.g., to within $\pm$10 GHz) carrier frequency to generate a plurality of mixed optical signals corresponding to different relative phase shifts between the two optical input signals. An optical 90-degree hybrid is a particular type of an optical hybrid that is designed to produce at least four mixed optical signals corresponding to the relative phase shifts between the two optical input signals of approximately 0, 90, 180, and 270 degrees, respectively (e.g., to within an acceptable tolerance). Depending on the intended application, the acceptable relative phase-shift tolerances can be, e.g., to within $\pm$5 degrees or $\pm$10 degrees, etc. A person of ordinary skill in the art will understand that each of the relative phase shifts is defined without accounting for a possible additional phase shift that is an integer multiple of 360 degrees. A dual-polarization optical hybrid, such as optical hybrid **126,** operates to perform the above-indicated optical signal mixing on a per-polarization basis.

Example optical hybrids that can be used as optical hybrid **126** in some alternative embodiments of O/E converter **120** are disclosed, e.g., in U.S. Patent Nos. 7,809,284 and 8,275,224, both of which are incorporated herein by reference in their entirety.

The signal processing implemented in analog electrical circuit **150** advantageously enables the use of relatively inexpensive LO sources **110** that may have relaxed specifications with respect to linewidth and wavelength stability when used for detecting amplitude/intensity-modulated signals. For example, in a representative embodiment of receiver **100,** it may be acceptable for LO signal **112** to have a relatively large linewidth and/or be not precisely spectrally aligned with optical input signal **102.** In conventional systems, the relatively large linewidth typically causes an unacceptable level of phase noise, and the carrier-wavelength mismatch between the input and LO signals typically requires the use of elaborate carrier-offset compensation schemes. In contrast, computer simulations of some embodiments of receiver **100** indicate that electrical output signal **152** has a good-quality (e.g., widely open) eye diagram even when the carrier frequency of LO signal **112** deviates from the carrier frequency of optical input signal **102** by as much as $\pm$150% of the baud rate of the latter signal.

FIG. 2 shows a block diagram of analog electrical circuit **150** that can be used in coherent optical receiver **100** (FIG. 1) according to an embodiment. Electrical input signals $142_1$-$142_8$, output port **P,** and electrical output signal **152** are also shown in FIG. 2 to better illustrate the relationship between the circuits of FIGs. 1 and 2.

Circuit **150** of FIG. 2 comprises transimpedance amplifiers (TIAs) $210_1$-$210_4$. TIA $210_1$ is connected to receive electrical input signals $142_1$ and $142_2$ at the positive and negative inputs thereof, respectively. TIA $210_2$ is connected to receive electrical input signals $142_3$ and $142_4$ at the positive and negative inputs thereof, respectively. TIA $210_3$ is connected to receive electrical input signals $142_5$ and $142_6$ at the positive and negative inputs thereof, respectively. TIA $210_4$ is connected to receive electrical input signals $142_7$ and $142_8$ at the positive and negative inputs thereof, respectively.

In some embodiments, TIAs $210_1$-$210_4$ can be variable gain amplifiers, as indicated in FIG. 2. Such embodiments can be used, e.g., in communication systems in which optical signal **102** can undergo relatively large intensity fluctuations. An example of such a system is a PON system in which different transmitters connected to communicate with receiver **100** are located at different respective distances therefrom, with the range of distances being such that the corresponding optical links suffer from significantly different respective optical losses therein.

In some embodiments, TIAs $210_1$-$210_4$ can be designed and configured for burst-mode operation.

As used herein, the term "burst mode" refers to an operating mode in which relatively short time periods during which the optical receiver (e.g., receiver **100**, FIG. 1) receives data-modulated optical signals are separated by idle intervals during which the optical receiver does not receive any optical signals. In some systems, the idle intervals may be much longer than the data-burst intervals. In some other systems, the idle intervals can be guard intervals configured to prevent collision and/or interference of data bursts transmitted to the same optical receiver by different transmitters.

TIAs that can be used to implement TIAs $210_1$-$210_4$ configured for burst-mode operation are disclosed, e.g., in U.S. Patent Nos. 7,583,904 and 9,673,797 and International Patent Application No. WO 2011/109770, all of which are incorporated herein by reference in their entirety.

Circuit **150** of FIG. 2 further comprises an analog signal-processing circuit **226** that may have optional tunable delay elements (e.g., phase shifters) $220_1$-$220_4$ connected to the outputs of TIAs $210_1$-$210_4$, respectively. Delay elements $220_1$-$220_4$ can be used to apply relatively small time delays (phase shifts) whose values can be appropriately selected to compensate for skew between the four different signal channels corresponding to TIAs $210_1$-$210_4$. The resulting skew-compensated electrical signals are labeled in FIG. 2 as signals $222_1$-$222_4$, respectively. The use of delay elements $220_1$-$220_4$ in circuit **150** can be beneficial, e.g., in that it can improve certain performance characteristics and/or relieve some design constraints for the downstream signal-processing circuits.

Analog signal-processing circuit **226** is configured to convert electrical signals $222_1$-$222_4$ into electrical output signal **152** in accordance with the following approximate formula:

$$V_{out} \propto \left|X_I\right|^2 + \left|X_Q\right|^2 + \left|Y_I\right|^2 + \left|Y_Q\right|^2 \qquad (1)$$

where $V_{out}$ is the voltage of electrical output signal 152; and $X_I$, $X_Q$, $Y_I$, and $Y_Q$ denote the instantaneous amplitudes of electrical signals $222_1$-$222_4$, respectively. A person of ordinary skill in the art will understand that the value of $V_{out}$ expressed by Eq. (1) provides a measure of the intensity (optical power) of optical input signal **102**. As such, the embodiment of circuit **150** shown in FIG. 2 is more suitable for processing electrical signals corresponding to an optical input signal **102** that has been generated using intensity (as opposed to amplitude) modulation.

In an example embodiment, analog signal-processing circuit **226** comprises squaring circuits $230_1$-$230_4$ and adders $240_1$-$240_3$ connected as indicated in FIG. 2.

Each of squaring circuits $230_1$-$230_4$ operates to generate a respective electrical output signal whose amplitude is proportional to the square of the amplitude of the respective one of electrical signals $222_1$-$222_4$. In an example embodiment, a squaring circuit **230** can be implemented using an analog multiplier whose two inputs are connected to one another and further connected to receive the corresponding electrical signal **222**.

Each of adders $240_1$-$240_3$ operates to generate a respective electrical output signal that is a sum of the two respective input signals. In an example embodiment, an adder **240** can be implemented using an operational amplifier, e.g., configured as known in the pertinent art.

FIG. 3 shows a block diagram of analog electrical circuit **150** that can be used in coherent optical receiver **100** (FIG. 1) according to another embodiment. The embodiments of circuit **150** shown in FIGs. 2 and 3 share many of the same elements, which are labeled using the same reference labels. For the description of these elements the reader is referred to the description of FIG. 2 given above. The description of FIG. 3 provided below mainly focuses on the differences between the circuits shown in FIGs. 2 and 3.

One difference between the embodiments of circuit **150** shown in FIGs. 2 and 3 is that the embodiment shown in FIG. 3 has analog signal-processing circuit **326** instead of analog signal-processing circuit **226** (see FIG. 2). Analog signal-processing circuit **326** (FIG. 3) differs from analog signal-processing circuit **226** (FIG. 2) in that it includes analog square-root (SQRT) generators $310_1$ and $310_2$. Square-root generator $310_1$ is inserted between adders $240_1$ and $240_3$. Square-root generator $310_2$ is similarly inserted between adders $240_2$ and $240_3$. As a result, analog signal-processing circuit **326** operates to convert electrical signals $222_1$-$222_4$ into electrical output signal **152** in accordance with the following approximate formula:

$$V_{out} \propto \sqrt{\left|X_I\right|^2 + \left|X_Q\right|^2} + \sqrt{\left|Y_I\right|^2 + \left|Y_Q\right|^2} \qquad (2)$$

A person of ordinary skill in the art will understand that the value of $V_{out}$ expressed by Eq. (2) can be used as an approximate measure of the electric-field strength (amplitude) of optical input signal **102**. As such, the embodiment of analog signal combiner **150** shown in FIG. 3 is better suitable for processing electrical signals corresponding to an optical input signal **102** that has been generated using amplitude (as opposed to intensity) modulation.

In an example embodiment, a square-root generator **310** can be implemented using an operational amplifier and an analog signal multiplier, with the latter being appropriately connected in the feedback loop of the operational amplifier.

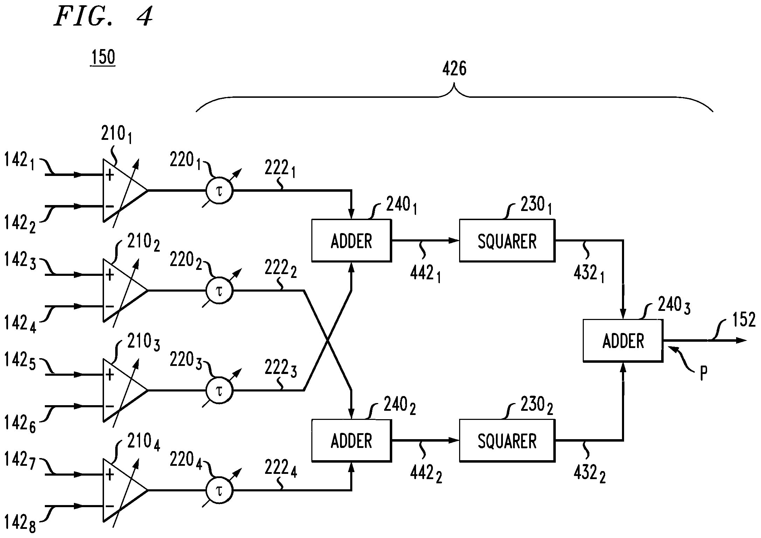

FIG. 4 shows a block diagram of analog electrical circuit **150** that can be used in coherent optical receiver **100** (FIG. 1) according to yet another embodiment. The embodiment of circuit **150** shown in FIG. 4 uses many of the circuit components previously described in reference to FIGs. 2 and 3. These components are labeled in FIG. 4 using the same reference labels as in FIGs. 2 and 3. However, some of these circuit components are arranged differently in the embodiment of circuit **150** shown in FIG. 4, as described in more detail below.

Circuit **150** of FIG. 4 comprises an analog signal-processing circuit **426** configured to convert electrical signals **222₁-222₄** into electrical output signal **152** in accordance with the following approximate formula:

$$V_{out} \propto \left| X_I + Y_I \right|^2 + \left| X_Q + Y_Q \right|^2 \qquad (3)$$

A person of ordinary skill in the art will understand that the value of $V_{out}$ expressed by Eq. (3) provides a measure of the intensity (optical power) of optical input signal **102**. As such, the embodiment of circuit **150** shown in FIG. 4 is more suitable for processing electrical signals corresponding to an optical input signal **102** that has been generated using intensity (as opposed to amplitude) modulation.

In an example embodiment, analog signal-processing circuit **426** comprises squaring circuits **230₁** and **230₂** and adders **240₁-240₃** connected as indicated in FIG. 4. More specifically, adder **240₁** is configured to generate an electrical signal **442₁** that is a sum of electrical signals **222₁** and **222₃**. Adder **240₂** is similarly configured to generate an electrical signal **442₂** that is a sum of electrical signals **222₂** and **222₄**. Squaring circuit **230₁** is configured to generate an electrical signal **432₁** whose amplitude is proportional to the square of the amplitude of electrical signal **442₁**. Squaring circuit **230₂** is similarly configured to generate an electrical signal **432₂** whose amplitude is proportional to the square of the amplitude of electrical signal **442₂**. Adder **240₃** is configured to generate a sum of electrical signals **432₁** and **432₂**, thereby generating electrical output signal **152**.

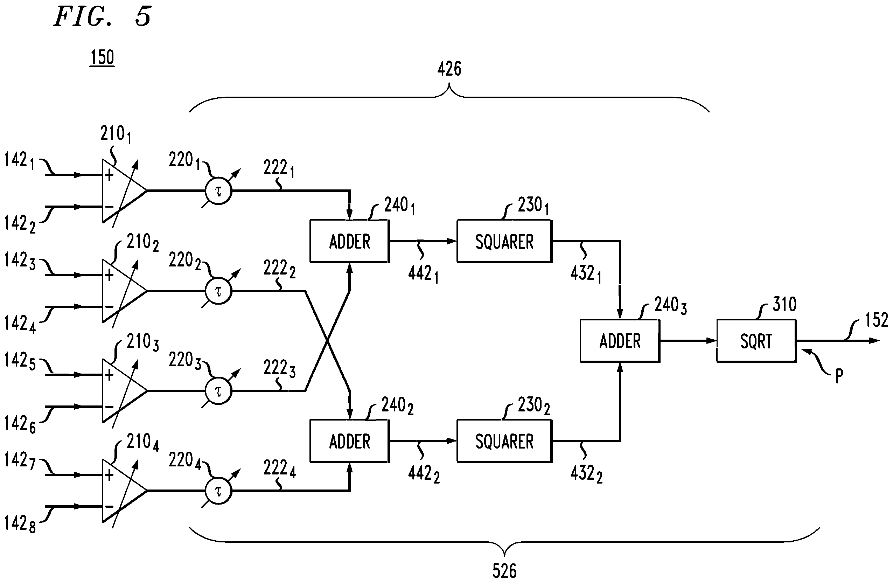

FIG. 5 shows a block diagram of analog electrical circuit **150** that can be used in coherent optical receiver **100** (FIG. 1) according to yet another embodiment. The embodiment of circuit **150** shown in FIG. 5 differs from the embodiment of circuit **150** shown in FIG. 4 in that it additionally has an analog square-root generator **310** connected to the output of analog signal-processing circuit **426**. A resulting combined analog signal-processing circuit **526** operates to convert electrical signals **222₁-222₄** into electrical output signal **152** in accordance with the following approximate formula:

$$V_{out} \propto \sqrt{\left| X_I + Y_I \right|^2 + \left| X_Q + Y_Q \right|^2} \qquad (4)$$

A person of ordinary skill in the art will understand that the value of $V_{out}$ expressed by Eq. (4) can be used as an approximate measure of the electric-field strength (amplitude) of optical input signal **102**. As such, the embodiment of circuit **150** shown in FIG. 4 is better suitable for processing electrical signals corresponding to an optical input signal **102** that has been generated using amplitude (as opposed to intensity) modulation.

FIG. 6 shows a block diagram of an O/E-converting circuit **600** that can be used in coherent optical receiver **100** (FIG. 1) according to an alternative embodiment. More specifically, circuit **600** is designed to replace the array of photodiodes **140₁-140₈** and analog electrical circuit **150** (see FIG. 1).

Circuit **600** comprises an array of photodiodes **640₁-640₈** arranged in pairs, as shown in FIG. 6, to form four balanced photodiode pairs, each pair operating as a photodetector. The four electrical output signals generated by these photodetectors are labeled in FIG. 6 as signals **642₁-642₄**.

Circuit **600** further comprises an analog signal-processing circuit **626** and a TIA **610**. In different embodiments, analog signal-processing circuit **626** can be a nominal copy of one of the above-described analog signal-processing circuits **226, 326, 426,** and **526** (see FIGs. 2-5). When used in the configuration shown in FIG. 6, each of analog signal-processing circuits **226, 326, 426,** and **526** is configured to receive electrical signals **642₁-642₄**. An electrical signal **628** generated by analog signal-processing circuit **626** is applied to TIA **610** in a single-ended configuration. The electrical output signal generated by TIA **610** in response to electrical signal **628** is electrical output signal **152** applied to output port **P** (also see FIG. 1).

For some applications, the use of circuit **600** instead of the circuits described in reference to FIGs. 2-5 may be beneficial in that circuit **600** is configured to use a single TIA **610** instead of four TIAs **210₁-210₄**. Depending on the particular embodiment of analog signal-processing circuit **626**, circuit **600** can operate to convert electrical signals **642₁-642₄** into electrical output signal **152** in accordance with any one of Eqs. (1)-(4).

FIG. 7 shows a block diagram of a data-recovery circuit **700** that can be used in conjunction with coherent optical receiver **100** (FIG. 1) according to an embodiment. More specifically, circuit **700** operates to recover the data encoded in modulated optical input signal **102** by processing electrical output signal **152** generated by optical receiver **100**, e.g., as indicated above. A recovered data stream **730** can then be provided to external circuits (not explicitly shown in FIG. 7) as appropriate or necessary.

Circuit **700** comprises a threshold slicer **710** and a clock-recovery circuit **720**. Clock-recovery circuit **720** is configured to generate a clock signal **722** that is synchronous with the internal clock of optical input signal **102** by processing a copy of electrical output signal **152**, e.g., as known in the pertinent art. Clock signal **722** is applied to slicer **710** to cause the slicer to sample electrical output signal **152** at appropriate times. Slicer **710** is configured to compare each of the signal samples obtained in this manner with a set of thresholds. Based on the comparison, slicer **710** generates a binary value (e.g., a bitword) representing the signal sample. The sequence of these binary values is data stream **730**.

FIG. 8 shows a block diagram of a data-recovery circuit **800** that can be used in conjunction with coherent optical receiver **100** (FIG. 1) according to another embodiment. Circuit **800** comprises an analog-to-digital converter (ADC) **810** and a digital signal processor (DSP) **820**. ADC **810** operates to convert electrical output signal **152** into digital form. DSP **820** then processes a stream **812** of digital signal samples generated by ADC **820** to recover the data encoded in modulated optical input signal **102**. A recovered data stream **830** can then be provided to external circuits (not explicitly shown in FIG. 8) as appropriate or necessary.

The use of digital signal processing provided by circuit **800** may be beneficial in some embodiments, e.g., due to the concomitant ability to apply digital equalization and/or forward-error correction. In addition, circuit **800** can be used to decode both intensity- and amplitude-encoded signals, e.g., because the square-root (SQRT) function can be performed in the digital domain instead of being performed in the analog domain as depicted in FIGs. 3 and 5.

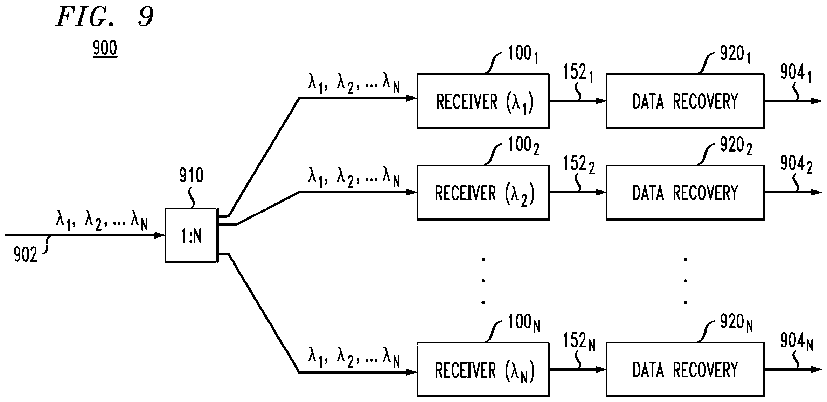

FIG. 9 shows a block diagram of a communication system **900** according to an embodiment. System **900** comprises N instances (nominal copies) of coherent optical receiver **100** (FIG. 1), where N is a positive integer greater than one. The N instances of coherent optical receiver **100** are labeled in FIG. 9 as $100_1$-$100_N$, respectively. Each of receivers $100_1$-$100_N$ is configured to detect an optical input signal having a respective one of wavelengths $\lambda_1$-$\lambda_N$, e.g., by tuning its laser **110** to that particular wavelength. Due to the coherent detection implemented in receiver **100** (see FIG. 1), the receiver can effectively select the input WDM component having the carrier wavelength corresponding to the wavelength of its laser **100,** while effectively rejecting all other input WDM components.

System 900 leverages the wavelength selectivity of receivers $100_1$-$100_N$ by employing a 1:N optical power splitter **910** instead of a normally required wavelength demultiplexer. In operation, splitter **910** splits a WDM signal **902** into N attenuated copies thereof and directs each copy to a respective one of receivers $100_1$-$100_N$. Receiver $100_1$, which is tuned to wavelength $\lambda_1$, detects the $\lambda_1$ component of the received copy of signal **902,** while rejecting all other wavelength components of that signal. The resulting electrical output signal $152_1$ is applied to a data-recovery circuit $920_1$, which processes that signal to recover the data encoded in the $\lambda_1$ component of signal **902** to generate a corresponding output data stream $904_1$. Receiver $100_2$, which is tuned to wavelength $\lambda_2$, detects the $\lambda_2$ component of the received copy of signal **902,** while rejecting all other wavelength components of that signal. The resulting electrical output signal $152_2$ is applied to a data-recovery circuit $920_2$, which processes that signal to recover the data encoded in the $\lambda_2$ component of signal **902** to generate a corresponding output data stream $904_2$, and so on. Receiver $100_N$, which is tuned to wavelength $\lambda_N$, detects the $\lambda_N$ component of the received copy of signal **902,** while rejecting all other wavelength components of that signal. The resulting electrical output signal $152_N$ is applied to a data-recovery circuit $920_N$, which processes that signal to recover the data encoded in the $\lambda_N$ component of signal 902 to generate a corresponding output data stream $904_N$.

In various embodiments, each of data-recovery circuits $920_1$-$920_N$ can be implemented using a nominal copy of data-recovery circuit **700** (FIG. 7) or a nominal copy of data-recovery circuit **800** (FIG. 8).

According to an example embodiment disclosed above in reference to FIGs. 1-9, provided is an apparatus (e.g., **900,** FIG. 9) comprising: an optical hybrid (e.g., **126,** FIG. 1) configured to generate a plurality of different optical interference signals by optically mixing an optical input signal (e.g., **102,** FIG. 1) and an optical local-oscillator signal (e.g., **112,** FIG. 1); a plurality of photodetectors (e.g., $140_1$-$140_8$, FIG. 1; four pairs of **640,** FIG. 6), each configured to generate a respective electrical signal (e.g., **142,** FIG. 1; **642,** FIG. 6) in response to receiving a respective subset of the different optical interference signals from the optical hybrid; an analog electrical circuit (e.g., **150,** FIG. 1; **626/610,** FIG. 6) connected to the plurality of photodetectors to generate an electrical output signal (e.g., **152,** FIGs. 1, 6) at an output port (e.g., **P,** FIG. 1) thereof in response to at least four of the respective electrical signals; and wherein the analog electrical circuit comprises a first transimpedance amplifier (e.g., **210,** FIGs. 2-5; **610,** FIG. 6) connected between the plurality of photodetectors and the output port.

In some embodiments of the above apparatus, the apparatus further comprises a data-recovery circuit (e.g., **920,** FIG. 9) configured to recover data encoded in the optical input signal by processing the electrical output signal generated by the analog electrical circuit.

In some embodiments of any of the above apparatus, the data-recovery circuit comprises: a clock-recovery circuit (e.g., **720,** FIG. 7) configured to generate a clock signal (e.g., **722,** FIG. 7) corresponding to the optical input signal in response to receiving the electrical output signal; and a slicer circuit (e.g., **710,** FIG. 7) configured to compare samples of the electrical output signal with a set of thresholds to recover the data, the samples being acquired at times selected using the clock signal.

In some embodiments of any of the above apparatus, the data-recovery circuit comprises: an analog-to-digital converter (e.g., **810,** FIG. 8) configured to generate a stream (e.g., **812,** FIG. 8) of digital samples representing the electrical output signal; and a digital signal processor (e.g., **820,** FIG. 8) configured to recover the data using the stream of digital samples.

In some embodiments of any of the above apparatus, the analog electrical circuit further comprises three additional transimpedance amplifiers (e.g., $210_2$-$210_4$, FIGs. 2-5) connected between the plurality of photodetectors and the output port.

In some embodiments of any of the above apparatus, the analog electrical circuit further comprises four tunable phase shifters (e.g., $220_1$-$220_4$, FIGs. 2-5), each connected to an output of a respective one of the first and three additional transimpedance amplifiers.

In some embodiments of any of the above apparatus, the first transimpedance amplifier comprises: a positive input connected to a first photodetector (e.g., $140_1$, FIG. 1) of the plurality of photodetectors to receive the respective electrical signal (e.g., $142_1$, FIG. 2) generated by the first photodetector; and a negative input connected to a second photodetector (e.g., $140_2$, FIGs. 1-2) of the plurality of photodetectors to receive the respective electrical signal (e.g., $142_2$, FIG. 2) generated by the second photodetector.

In some embodiments of any of the above apparatus, the analog electrical circuit is configured to generate the electrical output signal at the output port thereof in response to eight of the respective electrical signals (e.g., $142_1$-$142_8$, FIG. 2).

In some embodiments of any of the above apparatus, the plurality of photodetectors comprises eight photodiodes (e.g., $140_1$-$140_8$, FIG. 1).

In some embodiments of any of the above apparatus, the first transimpedance amplifier (e.g., **610,** FIG. 6) is configured to generate the electrical output signal at an output thereof, said output being connected to the output port of the analog electrical circuit.

In some embodiments of any of the above apparatus, the optical hybrid is configured to generate first, second, third, and fourth optical interference signals of the plurality of different optical interference signals using different respective combinations of light of a first polarization (e.g., v, FIG. 1) of the optical input signal and the optical local-oscillator signal.

In some embodiments of any of the above apparatus, the optical hybrid is configured to generate fifth, sixth, seventh, and eighth optical interference signals of the plurality of different optical interference signals using different respective combinations of light of a second polarization (e.g., **h,** FIG. 1) of the optical input signal and the optical local-oscillator signal, the second polarization being orthogonal to the first polarization.

In some embodiments of any of the above apparatus, each of the different respective combinations of the light are mixtures of the light of the first polarization of the optical input signal and the optical local-oscillator signal with relative phases of $0 \pm 5$ degrees, $90 \pm 5$ degrees, $180 \pm 5$ degrees, and $270 \pm 5$ degrees, respectively.

In some embodiments of any of the above apparatus, the apparatus further comprises a laser (e.g., 110, FIG. 1) configured to generate the optical local-oscillator signal.

In some embodiments of any of the above apparatus, the laser is capable of controllably changing a carrier wavelength of the optical local-oscillator signal.

In some embodiments of any of the above apparatus, the analog electrical circuit is configured to generate the electrical output signal in a manner (e.g., according to Eq. (1)) that causes the electrical output signal to be proportional to an optical power of the optical input signal.

In some embodiments of any of the above apparatus, the analog electrical circuit comprises: a squaring circuit (e.g., $230_1$-$230_4$, FIG. 2) configured to generate: a first electrical signal whose amplitude is proportional to a square of an amplitude of an electrical signal (e.g., $222_1$, FIG. 2) generated using a first photodetector of the plurality of photodetectors; a second electrical signal whose amplitude is proportional to a square of an amplitude of an electrical signal (e.g., $222_2$, FIG. 2) generated using a second photodetector of the plurality of photodetectors; a third electrical signal whose amplitude is proportional to a square of an amplitude of an electrical signal (e.g., $222_3$, FIG. 2) generated using a third photodetector of the plurality of photodetectors; and a fourth electrical signal whose amplitude is proportional to a square of an amplitude of an electrical signal (e.g., $222_4$, FIG. 2) generated using a fourth photodetector of the plurality of photodetectors; and an adding circuit (e.g., $240_1$-$240_3$, FIG. 2) configured to generate the electrical output signal using a sum of the first, second, third, and fourth electrical signals.

In some embodiments of any of the above apparatus, the analog electrical circuit comprises: a squaring circuit (e.g., $230_1$-$230_4$, FIG. 3) configured to generate: a first electrical signal whose amplitude is proportional to a square of an amplitude of an electrical signal (e.g., $222_1$, FIG. 2) generated using a first photodetector of the plurality of photodetectors; a second electrical signal whose amplitude is proportional to a square of an amplitude of an electrical signal

(e.g., $222_2$, FIG. 3) generated using a second photodetector of the plurality of photodetectors; a third electrical signal whose amplitude is proportional to a square of an amplitude of an electrical signal (e.g., $222_3$, FIG. 3) generated using a third photodetector of the plurality of photodetectors; and a fourth electrical signal whose amplitude is proportional to a square of an amplitude of an electrical signal (e.g., $222_4$, FIG. 3) generated using a fourth photodetector of the plurality of photodetectors; a first adding circuit (e.g., $240_1$-$240_2$, FIG. 3) configured to generate: a first summed signal using a sum of the first electrical signal and the second electrical signal; and a second summed signal using a sum of the third electrical signal and the fourth electrical signal; a square-root-generating circuit (e.g., $310_1$-$310_2$, FIG. 3) configured to generate: a first square-root signal proportional to a square root of the first summed signal; and a second square-root signal proportional to a square root of the second summed signal; and a second adding circuit (e.g., $240_3$, FIG. 3) configured to generate the electrical output signal using a sum of the first square-root signal and the second square-root signal.

In some embodiments of any of the above apparatus, the analog electrical circuit comprises: a first adding circuit (e.g., $240_1$-$240_2$, FIG. 4) configured to generate: a first summed signal (e.g., $442_1$, FIG. 4) using a sum of an electrical signal (e.g., $222_1$, FIG. 4) generated using a first photodetector of the plurality of photodetectors and an electrical signal (e.g., $222_3$, FIG. 4) generated using a second photodetector of the plurality of photodetectors; and a second summed signal (e.g., $442_2$, FIG. 4) using a sum of an electrical signal (e.g., $222_2$, FIG. 4) generated using a third photodetector of the plurality of photodetectors and an electrical signal (e.g., $222_4$, FIG. 4) generated using a fourth photodetector of the plurality of photodetectors; a squaring circuit (e.g., $230_1$-$230_2$, FIG. 4) configured to generate: a first electrical signal (e.g., $432_1$, FIG. 4) whose amplitude is proportional to a square of an amplitude of the first summed signal; and a second electrical signal (e.g., $432_2$, FIG. 4) whose amplitude is proportional to a square of an amplitude of the second summed signal; and a second adding circuit (e.g., $240_3$, FIG. 4) configured to generate the electrical output signal using a sum of the first electrical signal and the second electrical signal.

In some embodiments of any of the above apparatus, the analog electrical circuit comprises: a first adding circuit (e.g., $240_1$-$240_2$, FIG. 5) configured to generate: a first summed signal (e.g., $442_1$, FIG. 5) using a sum of an electrical signal (e.g., $222_1$, FIG. 5) generated using a first photodetector of the plurality of photodetectors and an electrical signal (e.g., $222_3$, FIG. 5) generated using a second photodetector of the plurality of photodetectors; and a second summed signal (e.g., $442_2$, FIG. 5) using a sum of an electrical signal (e.g., $222_2$, FIG. 5) generated using a third photodetector of the plurality of photodetectors and an electrical signal (e.g., $222_4$, FIG. 5) generated using a fourth photodetector of the plurality of photodetectors; a squaring circuit (e.g., $230_1$-$230_2$, FIG. 5) configured to generate: a first electrical signal (e.g., $432_1$, FIG. 5) whose amplitude is proportional to a square of an amplitude of the first summed signal; and a second electrical signal (e.g., $432_2$, FIG. 5) whose amplitude is proportional to a square of an amplitude of the second summed signal; a second adding circuit (e.g., $240_3$, FIG. 5) configured to generate a third summed signal (e.g., $240_3$, FIG. 5) using a sum of the first electrical signal and the second electrical signal; and a square-root-generating circuit (e.g., **310,** FIG. 5) configured to generate the electrical output signal to be proportional to a square root of the third summed signal.

According to another example embodiment disclosed above in reference to FIGs. 1-9, provided is a manufacturing method comprising the steps of: configuring an optical hybrid (e.g., **126,** FIG. 1) to generate a plurality of different optical interference signals by optically mixing an optical input signal (e.g., **102,** FIG. 1) and an optical local-oscillator signal (e.g., **112,** FIG. 1); connecting a plurality of photodetectors (e.g., $140_1$-$140_8$, FIG. 1; four pairs of **640,** FIG. 6) to cause each of the photodetectors to generate a respective electrical signal (e.g., **142,** FIG. 1; **642,** FIG. 6) in response to receiving a respective subset of the different optical interference signals from the optical hybrid; and connecting an analog electrical circuit (e.g., **150,** FIG. 1; **626/610,** FIG. 6) to the plurality of photodetectors to cause the analog electrical circuit to generate an electrical output signal (e.g., **152,** FIGs. 1, 6) at an output port (e.g., **P,** FIG. 1) thereof in response to at least four of the respective electrical signals, said connecting including connecting a transimpedance amplifier (e.g., **210,** FIGs. 2-5; **610,** FIG. 6) between the plurality of photodetectors and the output port.

According to yet another example embodiment disclosed above in reference to FIGs. 1-9, provided is a communication method comprising the steps of: applying an optical input signal (e.g., **102,** FIG. 1) to an optical hybrid (e.g., **126,** FIG. 1) to generate a plurality of different optical interference signals by optically mixing therein said optical input signal and an optical local-oscillator signal (e.g., **112,** FIG. 1); operating a plurality of photodetectors (e.g., $140_1$-$140_8$, FIG. 1; four pairs **of 640,** FIG. 6) to cause each of the photodetectors to generate a respective electrical signal (e.g., **142,** FIG. 1; **642,** FIG. 6) in response to receiving a respective subset of the different optical interference signals from the optical hybrid; and generating an electrical output signal (e.g., **152,** FIGs. 1, 6) using an analog electrical circuit (e.g., **150,** FIG. 1; **626/610,** FIG. 6) connected to the plurality of photodetectors, the electrical output signal being generated at an output port (e.g., P, FIG. 1) of the analog electrical circuit in response to at least four of the respective electrical signals, said generating including using a transimpedance amplifier (e.g., **210,** FIGs. 2-5; **610,** FIG. 6) connected between the plurality of photodetectors and the output port.

While this disclosure includes references to illustrative embodiments, this specification is not intended to be construed in a limiting sense. Various modifications of the described embodiments, as well as other embodiments within the scope of the disclosure, which are apparent to persons skilled in the art to which the disclosure pertains are deemed to lie within the principle and scope of the disclosure, e.g., as expressed in the following claims.

Unless explicitly stated otherwise, each numerical value and range should be interpreted as being approximate as if the word "about" or "approximately" preceded the value or range.

It will be further understood that various changes in the details, materials, and arrangements of the parts which have been described and illustrated in order to explain the nature of this disclosure may be made by those skilled in the art without departing from the scope of the disclosure, e.g., as expressed in the following claims.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements.

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope.

The functions of the various elements shown in the figures, including any functional blocks labeled as "processors" and/or "controllers," may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

**Claims**

1. An apparatus comprising:

    an optical hybrid configured to generate a plurality of different optical interference signals by optically mixing an optical input signal and an optical local-oscillator signal;
    a plurality of photodetectors, each configured to generate a respective electrical signal in response to receiving a respective subset of the different optical interference signals from the optical hybrid; and
    an analog electrical circuit connected to the plurality of photodetectors to generate an electrical output signal at an output port thereof in response to at least four of the respective electrical signals; and
    wherein the analog electrical circuit comprises a first transimpedance amplifier connected between the plurality of photodetectors and the output port.

2. The apparatus of claim 1, further comprising a data-recovery circuit configured to recover data encoded in the optical input signal by processing the electrical output signal generated by the analog electrical circuit.

3. The apparatus of claim 2, wherein the data-recovery circuit comprises:

    a clock-recovery circuit configured to generate a clock signal corresponding to the optical input signal in response to receiving the electrical output signal; and
    a slicer circuit configured to compare samples of the electrical output signal with a set of thresholds to recover the data, the samples being acquired at times selected using the clock signal.

4. The apparatus of claim 2, wherein the data-recovery circuit comprises:

an analog-to-digital converter configured to generate a stream of digital samples representing the electrical output signal; and

a digital signal processor configured to recover the data using the stream of digital samples.

5. The apparatus of claim 1, wherein the analog electrical circuit further comprises:

three additional transimpedance amplifiers connected between the plurality of photodetectors and the output port; and

four tunable phase shifters, each connected to an output of a respective one of the first and three additional transimpedance amplifiers.

6. The apparatus of claim 1, wherein the first transimpedance amplifier comprises:

a positive input connected to a first photodetector of the plurality of photodetectors to receive the respective electrical signal generated by the first photodetector; and

a negative input connected to a second photodetector of the plurality of photodetectors to receive the respective electrical signal generated by the second photodetector.

7. The apparatus of claim 1, wherein the analog electrical circuit is configured to generate the electrical output signal at the output port thereof in response to eight of the respective electrical signals.

8. The apparatus of claim 1, wherein the plurality of photodetectors comprises eight photodiodes.

9. The apparatus of claim 1, wherein the first transimpedance amplifier is configured to generate the electrical output signal at an output thereof, said output being connected to the output port of the analog electrical circuit.

10. The apparatus of claim 1, wherein the optical hybrid is configured to generate first, second, third, and fourth optical interference signals of the plurality of different optical interference signals using different respective combinations of light of a first polarization of the optical input signal and the optical local-oscillator signal.

11. The apparatus of claim 10, wherein the optical hybrid is configured to generate fifth, sixth, seventh, and eighth optical interference signals of the plurality of different optical interference signals using different respective combinations of light of a second polarization of the optical input signal and the optical local-oscillator signal, the second polarization being orthogonal to the first polarization.

12. The apparatus of claim 10, wherein each of the different respective combinations of the light are mixtures of the light of the first polarization of the optical input signal and the optical local-oscillator signal with relative phases of 0 $\pm$ 5 degrees, 90 $\pm$ 5 degrees, 180 $\pm$ 5 degrees, and 270 $\pm$ 5 degrees, respectively.

13. The apparatus of claim 1, further comprising a laser configured to generate the optical local-oscillator signal.

14. The apparatus of claim 13, wherein the laser is capable of controllably changing a carrier wavelength of the optical local-oscillator signal.

15. The apparatus of claim 1, wherein the analog electrical circuit is configured to generate the electrical output signal in a manner that causes the electrical output signal to be proportional to an optical power of the optical input signal.

*FIG. 1*

100

FIG. 2

150

226

$142_1$ $142_2$ → + − $210_1$ → $220_1$ τ $222_1$ → SQUARER $230_1$ → ADDER $240_1$

$142_3$ $142_4$ → + − $210_2$ → $220_2$ τ $222_2$ → SQUARER $230_2$ → ADDER $240_3$ → 152 P

$142_5$ $142_6$ → + − $210_3$ → $220_3$ τ $222_3$ → SQUARER $230_3$ → ADDER $240_2$

$142_7$ $142_8$ → + − $210_4$ → $220_4$ τ $222_4$ → SQUARER $230_4$

EP 3 461 035 A1

FIG. 3

FIG. 4

EP 3 461 035 A1

FIG. 5

*FIG. 6*

600

FROM 126

$640_1$ $642_1$
$640_2$
$640_3$ $642_2$
$640_4$
$640_5$ $642_3$
$640_6$
$640_7$ $642_4$
$640_8$

626

ANALOG SIGNAL-PROCESSING CIRCUIT

628

610

152

OUT

P

*FIG. 7*

700

152

710

SLICER

730

DATA

722

720

CLOCK RECOVERY

*FIG. 8*

800

152

810

ADC

812

820

DSP

830

DATA

FIG. 9

900

Europäisches
Patentamt

European
Patent Office

Office européen
des brevets

## EUROPEAN SEARCH REPORT

Application Number

EP 18 19 2922

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/021669 A2 (ALCATEL LUCENT USA INC [US]; CHEN YOUNG-KAI [US]; DOERR CHRISTOPHER RI) 25 February 2010 (2010-02-25) | 1-4,8, 10-15 | INV. H04B10/61 |
| A | * page 13, line 14 - page 15, line 17; figures 1a, 1c * | 5-7,9 | |
| A | US 2013/071109 A1 (KHATANA SUNIL KUMAR SINGH [US] ET AL) 21 March 2013 (2013-03-21) * paragraphs [0017] - [0023]; figures 1a, 1b * | 1-15 | |
| X | US 2013/230312 A1 (RANDEL SEBASTIAN A [US] ET AL) 5 September 2013 (2013-09-05) | 1-4,8, 10-15 | |
| A | * paragraphs [0012], [0022] - [0027]; figure 1 * | 5-7,9 | |
| A | US 2007/286611 A1 (WEBER RAVIV [IL] ET AL) 13 December 2007 (2007-12-13) * paragraphs [0032] - [0037]; figure 3 * | 1-15 | |

TECHNICAL FIELDS
SEARCHED       (IPC)

H04B
G02B

The present search report has been drawn up for all claims

| Place of search | Date of completion of the search | Examiner |
|---|---|---|
| Munich | 14 February 2019 | De Vries, Jane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 19 2922

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2019

| Patent document cited in search report | | Publication date | Patent family member(s) | | Publication date |
|---|---|---|---|---|---|
| WO 2010021669 | A2 | 25-02-2010 | CN | 102124387 A | 13-07-2011 |
| | | | EP | 2326978 A2 | 01-06-2011 |
| | | | KR | 20110033286 A | 30-03-2011 |
| | | | WO | 2010021669 A2 | 25-02-2010 |
| US 2013071109 | A1 | 21-03-2013 | NONE | | |
| US 2013230312 | A1 | 05-09-2013 | NONE | | |
| US 2007286611 | A1 | 13-12-2007 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7809284 B
- US 8275224 B
- US 7583904 B
- US 9673797 B
- WO 2011109770 A